# EUROPÄISCHE PATENTSCHRIFT

(11) **EP 0 619 682 B1**
(45) Veröffentlichungstag und Bekanntmachung des Hinweises auf die Patenterteilung: **29.08.2001**
(21) Anmeldenummer: 94101659.4
(22) Anmeldetag: 03.02.1994
(51) Int. Cl.: H04Q 3/00, H04Q 3/545

(54) **Verfahren zum Administrieren von Kommunikationssystemen**
Method for the administration of communication installations
Procédé pour l'administration d'installations de communication

(30) Priorität: 26.02.1993 DE 4306030
(43) Veröffentlichungstag der Anmeldung: 12.10.1994
(73) Patentinhaber: SIEMENS AKTIENGESELLSCHAFT, 80333 München (DE)
(72) Erfinder: Weng, Wolfgang, D-81739 München (DE); Wörndle, Friedrich, Dr. phil., D-83104 Ostermünchen (DE)

(56) Entgegenhaltungen:
- EP-A- 0 303 869
- ELECTRONICS & COMMUNICATIONS IN JAPAN, PART I - COMMUNICATIONS, Bd. 74, Nr. 4, April 1991 NEW YORK US, Seiten 1-11, XP 000262802 KONDO ET AL. 'Hierarchical service control scheme for Intelligent Network services'
- SIEMENS TELCOM REPORT, Bd. 12, Nr. 3, Mai 1989 BERLIN & MÜNCHEN DE, Seiten 80-82, XP 000028831 TIMMERMANN 'Protokollvereinbarungen für rechnergestütztes Netzmanagement'
- COMPUTER DESIGN, Bd. 24, Nr. 4, April 1985 LITTLETON US, Seiten 149-154, PROFANT 'Network management simplified through combined functions'
- IEEE GLOBAL TELECOMMUNICATIONS CONFERENCE & EXHIBITION, Bd. 2, 27.November 1989 DALLAS US, Seiten 454-459, XP 000091144 MURAKAMI ET AL. 'Process management and control software for distributed telecommunications switching systems'
- AT & T TECHNOLOGY, Bd. 6, Nr. 2, 1991 NEW YORK US, Seiten 30-37, XP 000259689 PRIBBLE ET AL. 'Tools for better network management'

## Beschreibung

Die Administration bzw. Verwaltung der Ressourcen eines Kommunikationssystems, insbesondere Vermittlungsanlagen, wird bekannterweise durch administrative bzw. betriebstechnische Anweisungen bewirkt. Die Administration von Kommunikationssystemen umfaßt insbesondere die Verwaltung der Teilnehmer'- und sonstigen Anschlüsse eines Kommunikationssystems, d.h. durch die Administration von Kommunikationssystemen wird im wesentlichen das Einrichten, Ändern und Löschen von Teilnehmeranschlüssen und insbesondere der internen bzw. Teilnehmerrufnummer durchgeführt. Die administrativen bzw. betriebstechnischen Anweisungen sind hierbei zu Kommandostapeln zusammenfaßbar. Jedem Kommandostapel wird hierbei vorteilhaft eine Bedieneraufgabe - z. B. Teilnehmer Einrichten - zugeordnet, wobei dieser Kommandostapel als bedieneraufgabenbezogenes Administrations-Programmodul definiert ist.

Aus der EP 0 303 869 A1 ist ein modular strukturiertes Kommunikationssystem mit betriebstechnischen Kommunikationsmitteln bekannt, in dem bedieneraufgabenbezogene Stapel von Administrations-Programmodulen gebildet und bearbeitet werden können.

Die bedieneraufgabenbezogenen Administrations-Programmodule werden vorteilhaft in einer Datenverarbeitungsanlage bzw. einem Personal Computer erstellt und über den Betriebs- bzw. Bedienanschluß an das jeweilige Kommunikationssystem übermittelt. Für die Administrierung mehrerer Kommunikationssysteme in einem Kommunikationsnetz werden Netzmanagementzentralen eingesetzt, wobei von den Netzmanagementzentralen die betriebstechnischen Anweisungen an die Betriebs- bzw. Bedienanschlüsse der Kommunikationssysteme über das vorhandene Kommunikationsnetz übermittelt werden. Die Bearbeitung der Administrations-Programmodule übernimmt meist eine die Bearbeitung koordinierende Verwaltungsroutine. Die bedieneraufgabenorientierten Administrations-Programmodule für die einzelnen Kommunikationssysteme werden weiterhin vorteilhaft in einer Datenverarbeitungsanlage bzw. einem PC gebildet.

Die der Erfindung zugrunde liegende Aufgabe ist darin zu sehen, ein Verfahren zum Transferieren und Protokollieren von bedieneraufgabenorientierten Administrations-Programmodulen von einer Datenverarbeitungsanlage bzw. einem Personal Computer an eine Netzmanagementzentrale auszugestalten. Die Aufgabe wird durch die Merkmale des Anspruchs 1 gelöst.

Der wesentliche Aspekt des erfindungsgemäßen Verfahrens ist darin zu sehen, daß jedes in der Datenverarbeitungsanlage bzw. einem Personal Computer gebildete Administrations-Programmodul als Administrations-Auftragsprogrammodul von der Datenverarbeitungsanlage über ein lokales Netzwerk an einen Auftragsdateispeicher in der Netzmanagementzentrale übermittelt und dort gespeichert wird. Gleichzeitig mit der Transferierung des Administrations-Auftragsprogrammoduls wird eine Aktualisierungsmeldung übermittelt, die zum einen das Transferieren eines Administrations-Auftragsprogrammoduls der Verwaltungsroutine, d.h. Auftragsverwaltungsroutine, anzeigt und andererseits Informationen über das transferierte Administrations-Auftragsprogrammodul enthält, die in eine in der Netzmanagementzentrale implementierte Auftragsbuchdatei eingetragen werden. In Abhängigkeit von den Informationsinhalten dieser eingetragenen Informationen wird mit Hilfe der Auftragsverwaltungroutine das zugeordnete, gespeicherte Administrations-Auftragsprogrammodul bearbeitet, d.h. dieses wird an das jeweilige Kommunikationssystem kontrolliert übermittelt, dort bearbeitet, und die zurückgesandten Bearbeitungsergebnisse werden im Sinne eines Abrufs durch die Datenverarbeitungsanlage bzw. den Personal Computer gespeichert. Während des Bearbeitens des Administrations-Auftragsprogrammoduls werden Bearbeitungsstatusinformationen gebildet und auftragsprogrammodulindividuell in die Auftragsbuchdatei eingetragen.

Gemäß einer vorteilhaften Ausgestaltung des erfindungsgemäßen Verfahrens wird durch die in einer weiteren transferierten Aktualisierungsmeldung enthaltene Auftragsart-, Auftrags- sowie Kommunikationssysteminformation die Art der eingetragenen Auftragsbearbeitung durch Eintrag der aktuell transferierten Auftragsartinformation in die Auftragsbuchdatei geändert oder die eingetragenen Bearbeitungsstatusinformationen gelesen und an die Datenverarbeitungsanlage transferiert, wobei durch die Auftrags- und Kommunikationssysteminformation das betroffene Administrations-Auftragsprogrammodul definiert ist - Anspruch 2. Mit dieser Aktualisierungsmeldung wird kein Administrations-Auftragsprogrammodul transferiert, sondern wird die Art der Auftragsbearbeitung eines bereits transferierten, eingetragenen Administrations-Auftragsprogrammoduls geändert, oder es werden während der Bearbeitung gebildete Bearbeitungsstatusinformationen von der Datenverarbeitungsanlage abgerufen.

Durch die Auftragsartinformation ist jeweils die Art der Auftragsbearbeitung angegeben. Die Auftragsartinformation ist durch eine Erfassungsinformation - Anspruch 3-, eine Startinformation - Anspruch 4-, eine Löschinformation - Anspruch 5-, eine Statusinformation - Anspruch 6- oder durch eine Zeitinformation - Anspruch 7- repräsentiert. Die Auftragsinformation ist besonders vorteilhaft durch eine bedieneraufgabenbezogene Information repräsentiert - Anspruch 8. Durch die Kommunikationssysteminformation ist das Kommunikationssystem definiert, dem das eingetragene Administrations-Auftragsprogrammodul zugeordnet ist.

Im folgenden wird das erfindungsgemäße Verfahren anhand eines Blockdiagrammes und zweier Übersichten erläutert.

Dabei zeigen
- FIG 1: in einem Blockschaltbild eine Netzmanagementzentrale (NMZ) und eine Datenverarbeitungsanlage (DVA) für das erfindungsgemäße Verfahren,
- FIG 2: eine schematische Darstellung einer Aktualisierungsmeldung, und
- FIG 3: eine schematische Darstellung der Auftragsbuchdatei.

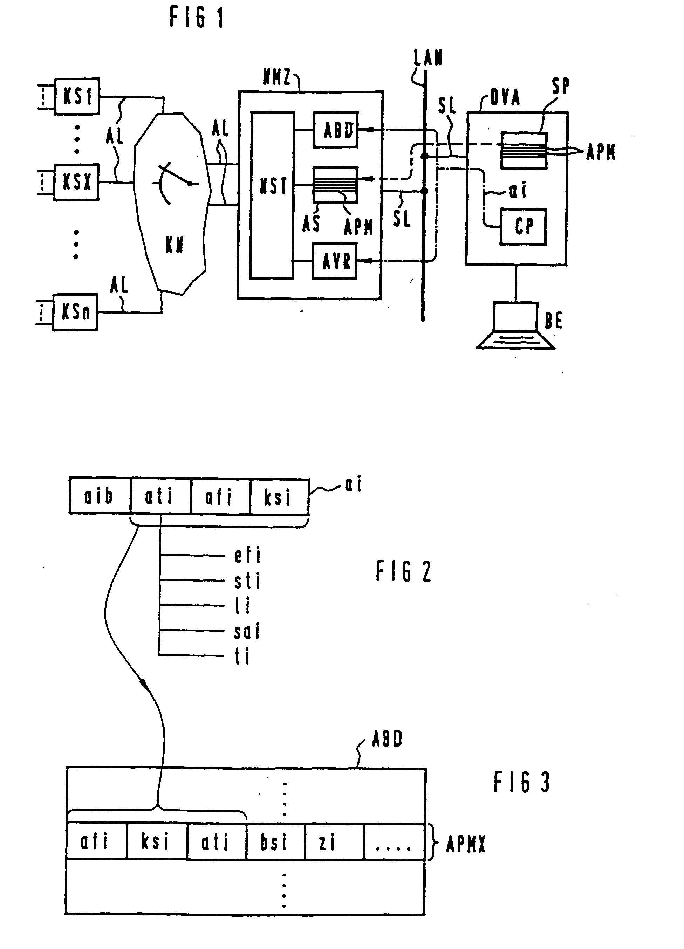

FIG 1 zeigt eine Netzmanagementzentrale NMZ, die über Anschlußleitungen AL und ein Kommunikationsnetz KN mit Kommunikationssystemen KS1 ... KSn verbindbar ist. Die Kommunikationssysteme KS1 ... KSn stellen beispielsweise Nebenstellenanlagen dar, die jeweils über eine Anschlußleitung AL mit dem Kommunikationsnetz - beispielsweise das öffentliche Fernsprechnetz - verbunden sind.

Die Netzmanagementzentrale NMZ ist des weiteren über eine Stichleitung SL mit einem lokalen Netz LAN verbunden, an das über eine weitere Stichleitung SL eine Datenverarbeitungsanlage DVA angeschlossen ist. Das lokale Netz LAN ist beispielsweise durch ein lokales Busnetz nach dem IEEE-Standard 802.3 "Carrier Sense Multiple Access with Collision Detection" realisiert. Die Netzmanagementzentrale NMZ weist eine zentrale Steuereinrichtung NST und einen Auftragsdateispeicher AS auf. Mit Hilfe der zentralen Steuerung NST wird eine programmtechnisch realisierte Auftragsverwaltungsroutine AVR und eine Auftragsbuchdatei ABD in der Netzmanagementzentrale NMZ realisiert.

Die Datenverarbeitungsanlage DVA weist einen Speicher SP auf, in dem Administrations-Auftragsprogrammodule APM gespeichert sind. Für das Ausführungsbeispiel sei angenommen, daß die Administrations-Auftragsprogrammodule APM mit Hilfe einer in der Datenverarbeitungsanlage DVA realisierten zentralen Steuerung CP und einer Bedieneinrichtung BE - z.B. als Bildschirmeinrichtung realisiert - gebildet und in dem Speicher SP gespeichert werden. Die einzelnen Administrations-Auftragsprogrammodule APM umfassen jeweils eine Bedieneraufgabe, wie z.B. Teilnehmer Einrichten, Ändern, usw. Mit Hilfe der zentralen Steuerung CP werden die Administrations-Auftragsprogrammodule APM über das lokale Netz LAN an den Auftragsdateispeicher AS übermittelt. Hierbei wird dem Administrations-Auftragsprogrammodul APM eine Aktualisierungsmeldung ai vorangestellt, mit deren Hilfe das Administrations-Auftragsprogrammodul APM transferiert und in der Netzmanagementzentrale NMZ protokolliert wird.

Der Aufbau einer Aktualisierungsmeldung ai ist in FIG 2 gezeigt. Im ersten Bereich dieser Aktualisierungsmeldung ai ist eine Information aib eingefügt, die diese Meldung als Aktualisierungsmeldung ai bestimmt. Darauf folgt eine Auftragsartinformation ati, durch die die Art der Auftragsbearbeitung definiert ist. Für das Ausführungsbeispiel sind in FIG 2 fünf Auftragsartinformationen ati angegeben, wobei jeweils nur eine dieser Auftragsartinformationen ati in eine Aktualisierungsmeldung ai einfügbar ist. Ist in der Aktualisierungsmeldung ai eine Erfassungsinformation efi enthalten, so wird das transferierte Administrations-Auftragsprogrammodul APM in den Auftragsdateispeicher AS gespeichert und die in der Aktualisierungsmeldung ai angegebenen Informationen mit Hilfe der Auftragsvewaltungsroutine AVR erfaßt und in die Auftragsbuchdatei ABD eingetragen. Ist die Auftragsartinformation ati durch eine Startinformation sti repräsentiert, so wird wie bei Vorliegen einer Erfassungsinformation das Administrations-Auftragsprogrammodul APM erfaßt und zusätzlich wird die Bearbeitung des Administrations-Auftragsprogrammoduls APM zum nächstmöglichen Zeitpunkt bewirkt. Stellt die Auftragsartinformation ati eine Löschinformation li dar, so wird der Auftrag, d.h. nicht das Administrations-Auftragsprogrammodul APM, gelöscht. Des weiteren ist die Auftragsartinformation ati durch eine Statusinformation sai repräsentierbar, wobei durch diese Statusinformation sai der jeweilige Betriebszustand, d.h. der Betriebsstatus des jeweiligen Administrations-Auftragsprogrammoduls APM abrufbar ist. Dies bedeutet, daß die vorhandenen Informationen über den Bearbeitungszustand des jeweiligen Administrations-Auftragsprogrammoduls APM von der Netzmanagementzentrale NMZ an die Datenverarbeitungsanlage DVA übermittelt werden. Die Auftragsartinformation ati ist letztlich durch eine Zeitinformation ti repräsentierbar, wobei durch die angegebene Zeitinformation ti der Beginn der Bearbeitung des zugeordneten Administrations-Auftragsprogrammoduls APM definiert ist.

Die Aktualisierungsmeldung ai weist des weiteren eine Auftragsinformation afi und eine Kommunikationssysteminformation ksi auf. Die Auftragsinformation afi gibt den Auftrag, d.h. die jeweilige, dem Administrations-Auftragsprogrammodul APM zugeordnete Bedieneraufgabe - wie erläutert z.B. Teilnehmer Einrichten - an. Die Kommunikationssysteminformation ksi gibt das Kennzeichen des Kommunikationssystems KS an, an das das Administrations-Auftragsprogrammodul APM übermittelt und bearbeitet wird, z.B. Teilnehmer Einrichten. Das Bearbeitungsergebnis bzw. die Bearbeitungszustandsinformationen werden an die Netzmanagementzentrale NMZ übermittelt. Im Ausführungsbeispiel sind n Kommunikationssystemen KS1...KSn als Kommunikationssysteminformation ksi die Ziffern 1...n zugeordnet.

In FIG 3 ist der Speicherbereich der Auftragsbuchdatei ABD dargestellt. Beispielhaft ist in die Auftragsbuchdatei ABD eine Informationszeile eingetragen, die einem Administrations-Auftragsprogrammodul APMx zugeordnet ist. Hierbei sind in die ersten drei Bereiche mit Hilfe der Auftragsverwaltungsroutine AVR die in der zugeordneten Aktualisierungsmeldung ai enthaltenen Auftragsart-, Auftrags- und Kommunikationssysteminformationen ati, afi, ksi eingetragen. Im vierten Bereich sind Bearbeitungszustandsinformationen bsi eingefügt. Diese Betriebsstatusinformationen bsi werden durch die Auftragsverwaltungsroutine AVR gebildet und in Abhängigkeit von dem aktuellen Bearbeitungszustand in diesen vierten Bereich eingetragen. Anschließend sind noch Zeitinformationen ti angefügt, die den Zeitpunkt bestimmter Bearbeitungszustände angeben.

Mit Hilfe einer von der Datenverarbeitungsanlage DVA transferierten Aktualisierungsmeldung ai, in der eine Statusinformation sai enthalten ist, sind folgende Betriebsstatus abrufbar:
- ein Erfassungsstatus efs, der anzeigt, daß das Administrations-Auftragsprogrammodul APM erfaßt wurde, jedoch kein Auftrag zur Bearbeitung vorliegt,
- ein Wartestatus, der den Wartezustand des jeweiligen Administrations-Auftragsprogrammoduls APM bis zur nächstmöglichen oder einem terminierten Bearbeitungsbeginn anzeigt,
- ein Übermittlungsstatus, der anzeigt, daß das jeweilige Administrations-Auftragsprogrammodul APM an das durch die Kommunikationssysteminformation ksi bestimmte Kommunikationssystem KS übermittelt wurde,
- ein Ausführungsstatus, das das Bearbeitungsende des jeweiligen Administrations-Auftragsprogrammoduls APM anzeigt,
- ein Fehlerstatus fes, durch den ein Fehler während der Bearbeitung des Administrations-Auftragsprogrammoduls APM angezeigt wird,
- ein Ergebnisstatus ers, der das Ergebnis der Bearbeitung des Administrations-Auftragsprogrammoduls APM anzeigt,
- ein Löschstatus, der anzeigt, daß der Auftrag für das zugeordnete Administrations-Auftragsprogrammodul APM gelöscht wurde, und
- ein Vorhandenstatus, der das Vorhandensein eines Administrations-Auftragsprogrammoduls APM im Auftragsdateispeicher AS anzeigt.

## Patentansprüche

1. Verfahren zum Transferieren und Protokollieren von bedieneraufgabenorientierten, durch betriebstechnische Anweisungen gebildeten Administrations-Auftragsprogrammodulen (APM) von einer Datenverarbeitungsanlage (DVA) über ein lokales Netz (LAN) an eine mit Kommunikationssystemen (KS) über ein Kommunikationsnetz (KN) verbindbare Netzmanagementzentrale (NMZ), wobei in der Netzmanagementzentrale (NMZ) eine die Bearbeitung der Administrations-Auftragsprogrammodule (APM) koordinierende Auftragsverwaltungsroutine (AVR) vorgesehen ist,
**dadurch gekennzeichnet**, daß
- von der Datenverarbeitungsanlage (DVA) die Administrations-Auftragsprogrammodule (APM) in einen Auftragsdateispeicher (AS) der Netzmanagementzentrale (NMZ) transferiert und die in einer zugeordneten Aktualisierungsmeldung (ai) enthaltene Auftrags- und Kommunikationssysteminformation (afi, ksi) sowie eine Auftragsartinformatiformation (ati) in eine in der Netzmanagementzentrale (NMZ) vorgesehenen Auftragsbuchdatei (ABD) eingetragen werden, wobei durch die jeweilige Aktualisierungsmeldung (ai) der Auftragsverwaltungsroutine (AVR) der jeweilige Eintrag in die Auftragsbuchdatei (ABD) angezeigt wird, und
- in Abhängigkeit von den Informationsinhalten der in der Aktualisierungsmeldung (ai) enthaltenen Auftragsartinformation (ati) sowie Auftrags- und Kommunikationssysteminformation (afi, ksi) mit Hilfe der Auftragsverwaltungsroutine (AVR) die gespeicherten Administrations-Auftragsprogrammodule (APM) bearbeitet sowie Bearbeitungsstatusinformationen (bsi) administrations-auftragsprogrammindividuell in die Auftragsbuchdatei (ABD) eingetragen werden.

2. Verfahren nach Anspruch 1,
**dadurch gekennzeichnet,**
daß durch die in einer weiteren transferierten Aktualisierungsmeldung (ai) enthaltenen Auftragsart-, Auftrags- sowie Komunikationssysteminformation (ati, afi, ksi) die Art der eingetragenen Auftragsbearbeitung durch Eintrag der aktuell transferierten Auftragsartinformation (ati) in die Auftragsbuchdatei (ABD) geändert wird oder die eingetragenen Bearbeitungsstatusinformationen (bsi) gelesen und an die Datenverarbeitungsanlage (DVA) transferiert werden, wobei durch die Auftrags- und Kommunikationssysteminformation (afi, ksi) das betroffene Administrations-Auftragsprogrammodul (APM) definiert ist.'

3. Verfahren nach Anspruch 1 oder 2,
**dadurch gekennzeichnet,**
daß die Auftragsartinformation (ati) durch eine Erfassungsinformation (efi) repräsentiert ist, durch die das Erfassen eines Administrations-Auftragsprogrammoduls (APM) sowie der Auftrags- und Kommunikationssysteminformation (afi, ksi) in der Auftragsbuchdatei (ABD) bewirkt wird.

4. Verfahren nach einem der Ansprüche 1 oder 2,
**dadurch gekennzeichnet,**
daß die Auftragsartinformation (ati) durch eine Startinformation (sti) repräsentiert ist, durch die das Erfassen des aktuell übermittelten Administrations-Auftragsprogrammoduls (APM) in die Auftragsbuchdatei (ABD) und der nächstmögliche Bearbeitungsbeginn des Administrations-Auftragsprogrammoduls (APM) bewirkt wird.

5. Verfahren nach einem der Ansprüche 1 oder 2,
**dadurch gekennzeichnet,**
daß die Auftragsartinformation (ati) durch eine Löschinformation (li) repräsentiert ist, durch die das Löschen des Bearbeitungsauftrages für das zugeordnete Administrations-Auftragsprogrammoduls (APM) bewirkt wird.

6. Verfahren nach einem der Ansprüche 1 oder 2,
**dadurch gekennzeichnet,**
daß die Auftragsartinformation (ati) durch eine Statusinformation (sai) repräsentiert ist, durch die ein Abfragen der Bearbeitungsstatusinformationen (bsi) des zugeordneten Administrations-Auftragsprogrammoduls (APM) bewirkt wird, wobei
- ein die Erfassung des Administrations-Auftragsprogrammoduls (APM) anzeigender Erfassungsstatus (EFS),
- ein den Wartezustand des jeweiligen Administrations-Auftragsprogrammoduls (APM) anzeigender Wartestatus,
- ein die Übermittlung des jeweiligen Administrations-Auftragsprogrammoduls (APM) an eines der Kommunikationssysteme (KS) anzeigenden Übermittlungsstatus,
- ein das Bearbeitungsende des jeweiligen Administrations-Auf-Programmoduls (APM) anzeigender Ausführungsstatus,
- ein einen Fehler während der Bearbeitung des Administrations-Auftragsprogrammoduls (APM) anzeigender Fehlerstatus (FES),
- ein ein Bearbeitungsergebnis des jeweiligen Administrations-Auftragsprogrammoduls (APM) anzeigender Ergebnisstatus (ERS),
- ein den Löschzustand des Bearbeitungsauftrags des jeweiligen Administrations-Auftragsprogrammoduls (APM) anzeigenden Löschzustand, und
- ein das Nichtvorhandensein des jeweiligen Administrations-Auftragsprogrammoduls (APM) anzeigender Vorhandenstatus, abfragbar ist.

7. Verfahren nach einem der Ansprüche 1 oder 2,
**dadurch gekennzeichnet,**
daß die Auftragsartinformation (ati) durch eine Zeitinformation (ti) repräsentiert ist, durch die der Bearbeitungsbeginn des zugeordneten Administrations-Auftragsprogrammoduls (APM) festgelegt ist.

8. Verfahren nach einem der vorhergehenden Ansprüche ,
**dadurch gekennzeichnet,**
daß die Auftragsinformation (afi) durch eine bedieneraufgabenbezogene Information repräsentiert ist.

9. Verfahren nach einem der vorhergehenden Ansprüche,
**dadurch gekennzeichnet,**
daß durch die Kommunikationssysteminformation (ksi) das Kommunikationssystem (KS) im Kommunikationsnetz (KN) definiert ist, dem das eingetragene Administrations-Auftragsprogrammodul (APM) zugeordnet ist.

## Claims

1. Method for transferring and logging user task-oriented administration order program modules (APM) formed by operational instructions from a data processing installation (DVA) via a local area network (LAN) to a network management centre (NMZ) which can be connected to communication systems (KS) via a communication network (KN), where an order management routine (AVR) co-ordinating the processing of the administration order program modules (APM) is provided in the network management centre (NMZ),
**characterized in that**
- the data processing installation (DVA) transfers the administration order program modules (APM) to an order file memory (AS) in the network management centre (NMZ), and the order and communication system information (afi, ksi) contained in an associated update message (ai) and also an order type information item (ati) are entered into an order book file (ABD) provided in the network management centre (NMZ), the respective update message (ai) of the order management routine (AVR) indicating the respective entry in the order book file (ABD), and
- depending on the information contents of the order type information (ati) contained in the update message (ai) and also of the order and communication system information (afi, ksi), the order management routine (AVR) is used to process the stored administration order program modules (APM) and also to enter processing status information (bsi) into the order book file (ABD) on the basis of individual administration order programs.

2. Method according to Claim 1,
**characterized**
**in that** the order type, order and communication system information (ati, afi, ksi) contained in a further transferred update message (ai) changes the type of entered order processing by entering the currently transferred order type information (ati) into the order book file (ABD) or reads the entered processing status information (bsi) and transfers it to the data processing installation (DVA), the order and communication system information (afi, ksi) defining the relevant administration order program module (APM).

3. Method according to Claim 1 or 2,
**characterized**
**in that** the order type information (ati) is represented by a recording information item (efi) which records an administration order program module (APM) and also the order and communication system information (afi, ksi) in the order book file (ABD).

4. Method according to one of Claims 1 or 2,
**characterized**
**in that** the order type information (ati) is represented by a start information item (sti) which records the currently transmitted administration order program module (APM) in the order book file (ABD) and effects the next possible start of processing for the administration order program module (APM).

5. Method according to one of Claims 1 or 2,
**characterized**
**in that** the order type information (ati) is represented by a deletion information item (li) which deletes the processing order for the associated administration order program module (APM).

6. Method according to one of Claims 1 or 2,
**characterized**
**in that** the order type information (ati) is represented by a status information item (sai) which requests the processing status information (bsi) for the associated administration order program module (APM), where it is possible to request
- a recording status (EFS) indicating recording of the administration order program module (APM),
- a standby status indicating the standby state of the respective administration order program module (APM),
- a transmission status indicating the transmission of the respective administration order program module (APM) to one of the communication systems (KS),
- an execution status indicating the end of processing for the respective administration order program module (APM),
- an error status (FES) indicating an error during the processing of the administration order program module (APM),
- a result status (ERS) indicating a processing result for the respective administration order program module (APM),
- a deletion state indicating the deletion state of the processing order for the respective administration order program module (APM), and
- a present status indicating the absence of the respective administration order program module (APM).

7. Method according to one of Claims 1 or 2,
**characterized**
**in that** the order type information (ati) is represented by a time information item (ti) which stipulates the start of processing for the associated administration order program module (APM).

8. Method according to one of the preceding claims,
**characterized**
**in that** the order information (afi) is represented by a user task-related information item.

9. Method according to one of the preceding claims,
**characterized**
**in that** the communication system information (ksi). defines the communication system (KS) in the communication network (KN) which has the entered administration order program module (APM) associated with it.

## Revendications

1. Procédé pour transférer et traiter en liste des modules (APM) de programme d'instruction d'administration orientés sur des tâches d'utilisateurs, formés par des instructions de la technique d'exploitation, d'une installation (DVA) de traitement de données, par l'intermédiaire d'un réseau (LAN) local, à une unité (NMZ) centrale de gestion de réseaux pouvant être reliée à des systèmes (KS) de communication par l'intermédiaire d'un réseau (KN) de communication, une routine (AVR) de gestions d'instructions coordonnant le traitement des modules (APM) de programme d'instruction d'administration étant prévue dans l'unité (NMZ) centrale de gestion de réseaux,
**caractérisé**
- en ce qu'il est transféré d'une installation (DVA) de traitement de données les modules (APM) de programme d'instruction d'administration à une mémoire (AS) de fichier d'instructions de l'unité (NMZ) centrale de gestion de réseaux et l'information (afi, ksi) sur l'instruction et sur le système de communication ainsi qu'une information (ati) sur le genre d'instruction, contenues dans une signalisation (ai) de mise à jour associée, sont entrées dans un fichier (ABD) de livre d'instructions prévu dans l'unité (NMZ) centrale de gestion de réseaux, l'entrée associée dans le fichier (ABD) de livre d'instructions étant indiquée par la signalisation (ai) de mise à jour associée à la routine (AVR) de gestion d'instructions, et
- en ce que, en fonction des contenus d'informations, de l'information (ati) sur le genre d'instruction ainsi que de l'information (afi, ksi) sur le système de communication, contenues dans la signalisation (ai) de mise à jour, les modules (APM) de programme d'instruction d'administration mis en mémoire sont traités à l'aide de la routine (AVR) de gestion d'instruction et des informations (bsi) d'état de traitement sont entrées de manière individuelle pour chaque programme d'instruction d'administration dans le fichier (ABD) de livre d'instructions.

2. Procédé suivant la revendication 1, **caractérisé en ce que** le genre du traitement d'instruction entré est modifié par l'information (ati, afi, ksi) sur le genre d'instruction, sur l'instruction ainsi que sur le système de communication, contenue dans une signalisation (ai) de mise à jour supplémentaire transférée, par entrée de l'information (ati) sur le genre d'instruction transférée sur le moment dans le fichier (ABD) de livre d'instructions, où les informations (bsi) de statut de traitement entrées sont lues et transférées à l'installation (BVA) de traitement de données, le module (APM) de programme d'instruction d'administration concerné étant défini par l'information (afi, ksi) sur l'instruction et sur le système de communication.

3. Procédé suivant la revendication 1 ou 2, **caractérisé en ce que** l'information (ati) sur le genre d'instruction et représentée par une information (efi) d'enregistrement par laquelle la saisie d'un module (APM) de programme d'instruction d'administration ainsi que de l'information (afi, ksi) sur l'instruction et sur le système de communication dans le fichier (ABD) de livre d'instructions est provoquée.

4. Procédé suivant l'une des revendications 1 ou 2, **caractérisé en ce que** l'information (ati) sur le genre d'instruction est représentée par une information (sti) de démarrage par laquelle la saisie du module (APM) de programme d'instruction d'administration transmis sur le moment dans le fichier (ABD) de livre d'instructions et le début de traitement le plus rapide possible du module (APM) de programme d'instruction d'administration sont provoqués.

5. Procédé suivant l'une des revendications 1 ou 2, **caractérisé en ce que** l'information (ati) sur le genre d'instruction est représentée par une information (li) d'effaçage par laquelle l'effaçage de l'instruction de traitement pour le module (APM) de programme d'instruction d'administration associé est provoqué.

6. Procédé suivant l'une des revendications 1 ou 2, **caractérisé en ce que** l'information (ati) sur le genre d'instruction est représentée par une information (sai) d'état par laquelle est provoquée une interrogation des informations (bsi) d'état de traitement du module (APM) de programme d'instruction d'administration,
- un état (EFS) d'enregistrement indiquant la saisie du module (APM) de programme d'instruction d'administration,
- un état d'attente indiquant l'état d'attente du module (APM) de programme d'instruction d'administration associé,
- un état de transmission indiquant la transmission du module (APM) de programme d'instruction d'administration associé à l'un des systèmes (KS) de communication,
- un état d'exécution indiquant la fin du traitement du module (APM) de programme d'instruction d'administration associé,
- un état (FES) d'erreur indiquant une erreur pendant le traitement du module (APM) de programme d'instruction d'administration,
- un état (ERES) de résultat indiquant un résultat du traitement du module (APM) de programme d'instruction d'administration associé,
- un état d'effaçage indiquant l'état d'effaçage de l'instruction de traitement du module (APM) de programme d'instruction d'administration associé, et
- un état de présence indiquant la non présence du module (APM) de programme d'instruction d'administration associé,
pouvant être interrogés.

7. Procédé suivant l'une des revendications 1 ou 2, **caractérisé en ce que** l'information (ati) sur le genre d'instruction est représentée par une information (ti) de temps par laquelle le début du traitement du module (APM) de programme d'instruction d'administration associé est fixé.

8. Procédé suivant l'une des revendications précédentes, **caractérisé en ce que** l'information (afi) sur l'instruction est représentée par une information se rapportant à une tâche d'utilisateur.

9. Procédé suivant l'une des revendications précédentes, **caractérisé en ce qu**'il est défini par l'information (ksi) sur le système de communication le système (KS) de communication dans le réseau (KN) de communication auquel le module (APM) de programme d'instruction d'administration entré est associé.
